# EUROPÄISCHE PATENTSCHRIFT

(11) **EP 1 003 023 B1**
(45) Veröffentlichungstag und Bekanntmachung des Hinweises auf die Patenterteilung: **15.10.2003**
(21) Anmeldenummer: 99122734.9
(22) Anmeldetag: 16.11.1999
(51) Int. Cl.: G01L 9/10, G01L 13/02, G01L 9/00

(54) **Induktiver Differenzdruckgeber**
Inductive differential pressure transducer
Capteur de pression différentielle à inductance

(30) Priorität: 21.11.1998 DE 19853789
(43) Veröffentlichungstag der Anmeldung: 24.05.2000
(73) Patentinhaber: MTU Aero Engines GmbH, 80995 München (DE)
(72) Erfinder: Schwamm, Friedrich, 85604 Zorneding (DE); Wohlrab, Dankwart, 85276 Pfaffenhofen (DE)
(74) Vertreter: Einsele, Rolf W.

(56) Entgegenhaltungen:
- DE-A- 3 605 344
- GB-A- 1 285 889
- US-A- 3 678 754
- US-A- 4 678 991
- US-A- 4 808 958

## Beschreibung

Die Erfindung betrifft einen Differenzdruckgeber für Gasturbinentriebwerke, gemäß dem Oberbegriff des Patentanspruches 1.

Für die Triebwerksregelung/-überwachung ist es vorteilhaft, wenn an bestimmten Stellen, insbesondere des Kraftstoff- und Schmierölsystems, der jeweilige Differenzdruck zuverlässig gemessen werden kann. Die Messung mit käuflichen Druckgebern, wie z.B. Druckdosen, ist hinsichtlich Gewicht, Kosten und Zuverlässigkeit problematisch.

Die genannten Druckdosen bestehen üblicherweise aus einem evakuierten Behälter mit einer elastisch verformbaren Membran, wobei durch mechanische Verformung und somit elektrische Veränderung von Widerständen in Brückenschaltung variable elektrische Signale erzeugt werden, welche als Maß für aktuell vorhandene Differenzdrücke verwendbar sind. Speziell die hohen Kraftstoff- und Öltemperaturen bei Gasturbinentriebwerken sowie die Druckspitzen in diesen Flüssigkeiten verursachen eine sehr schlechte Zuverlässigkeit der Druckdosen, nicht zuletzt durch bleibende, nicht erfaßbare Verformungen der maßgeblichen Elemente (Membran, Widerstände).

Aufgrund dieser Nachteile konnten sich Druckdosen für Triebwerksanwendungen bisher nicht durchsetzen.

Bis dato werden deshalb bei den notwendigen Differenzdruck-Überwachungen druckgesteuerte, elektrische Schalter nach dem Ja-/Nein-Prinzip mit zwischen zwei Endstellungen umschnappenden, mechanischen Federelementen verwendet. Die unzureichende Schalterüberwachung sowie die fehlende Erfassung der Differenzdruckentwicklung, d.h. seines Verlaufs, werden dabei in Kauf genommen.

Für Positionsmessungen unter schwierigen Einsatzbedingungen ist das LVDT-Prinzip bekannt. Dabei handelt es sich um elektrische Weggeber mit zumindest annähernd linearer Abhängigkeit zwischen Signal und Weg. Diese Geber sind bekanntermaßen auch für höhere Temperaturen und stärkere mechanische Belastungen geeignet.

US 4 678 991 A schützt einen induktiven Positionsgeber nach dem LVDT- bzw. RVDT-Prinzip für translatorische bzw. rotatorische Bewegungen, mit einem beweglichen, ferromagnetischen Kern (48), mit einer wechselspannungserregten Primärspule (42) und mit zwei zu dieser koaxialen, axial hintereinander angeordneten Sekundärspulen (44,46). Kern und Spulen sind nur durch einen Luftspalt (air gap 52) voneinander getrennt. Es sind keine Hydraulik- bzw. Fluidikelemente vorhanden, insbesondere gibt es keinen Zylinder, in dem der Kern als Kolben arbeiten könnte. Es gibt lediglich eine den Kern bewegende, mechanische Stange bzw. Welle (mechanical shaft 50), welche zu einem Stellelement (actuator) führt. Die Besonderheit der elektrischen Schaltung liegt darin, dass die beiden Sekundärspulen (44,46) gegensinnig in Reihe geschaltet sind (series opposed), um einen Nulldurchgang/Vorzeichenwechsel des Spannungsausgangssignals zu vermeiden (unipolar signal indication). Somit haben die Sekundärspulen nur einen gemeinsamen Spannungsabgriff (terminals 54,60).

DE 36 05 344 A offenbart einen Messgeber für Hydrauliksysteme, mit einem Kolben (10), der in einem mit dem Hydrauliksystem verbindbaren Zylinder (12) beweglich ist, und mit einem induktiven Geber (16) mit Spulen (18, 20, 22), die auf den Zylinder (12) gewickelt sind zur Erzeugung eines von der Lage des Kolbens (10) im Zylinder (12) abhängigen Signals. Der induktive Geber (16) ist ein sogenannter Differentialtransformator mit einem Paar von wechselstromgespeisten Primärwicklungen (18, 20), die in einer Sekundärwicklung (22) einander entgegengerichtete, magnetische Kraftflüsse erzeugen und somit eine kolbenlageabhängige Ausgangswechselspannung. Der Kolben (10) ist auf einer Seite von dem Hydraulikdruck des Systems beaufschlagt und liegt auf der anderen Seite an einem Federelement (24) an.

GB 1 285 889 A betrifft Differenzdruckgeber, die für hohe Temperaturen (z.B. 600°C) geeignet sind. Ein ferromagnetischer Kolben (11) ist in einem Zylinder (12) axial beweglich und wird von Federn (32, 33) in einer Mittellage gehalten. Der Kolben (11) wird direkt vom Differenzdruck eines heißen Fluids beaufschlagt, wobei eine geringe Leckage zwischen Kolben (11) und Zylinder (12) zulässig ist. Außerhalb des Zylinders (12) sind eine Primärspule (27) und eine Sekundärspule (28) axial hintereinander zur Induktion eines kolbenlagenabhängigen Ausgangssignals angeordnet.

Ausgehend von diesem Stand der Technik besteht die Aufgabe der Erfindung darin, einen Differenzdruckgeber für Gasturbinentriebwerke bereitzustellen, welcher die stufenlose Messung variabler Druckunterschiede innerhalb eines Mediums oder zwischen unterschiedlichen Medien ermöglicht und auch unter den harten Einsatzbedingungen bei Triebwerken auf Dauer zuverlässig arbeitet.

Diese Aufgabe wird durch einen Differenzdruckgeber mit den Merkmalen des Anspruchs 1 gelöst. Das Wesen der Erfindung liegt somit - kurz gesagt - in einer Übertragung des LVDT-Prinzips auf Differenzdruckgeber, wobei das elektrische Differenzdrucksignal zumindest weitgehend proportional zum anliegenden Differenzdruck ist.

In den Unteransprüchen sind bevorzugte Ausgestaltungen des Differenzdruckgebers nach dem Hauptanspruch gekennzeichnet.

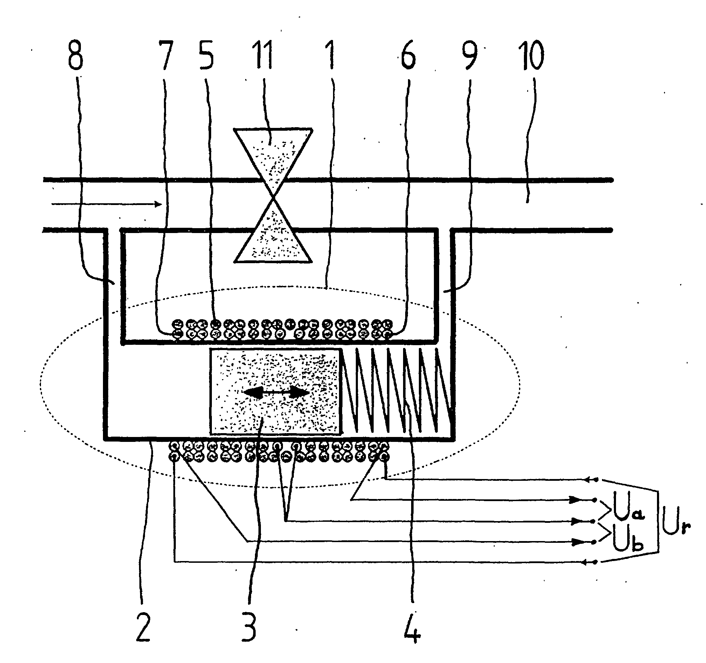

Die Erfindung wird anschließend anhand der Zeichnung noch näher erläutert. Diese zeigt in stark vereinfachter, mehr schematischer Darstellung die wesentlichen Elemente sowie die Anordnung eines Differenzdruckgebers nach dem LVDT-Prinzip.

Der unmittelbare Bereich des Differenzdruckgebers 1 ist in der Figur der Deutlichkeit wegen mit einer gepunkteten Ellipse eingerahmt. Über diesem Bereich erkennt man eine Leitung 10, welche beispielsweise Kraftstoff, d.h. Kerosin, zu einem Gasturbinentriebwerk (nicht dargestellt) führt. Die Strömungsrichtung in der Leitung 10 ist links mit einem Pfeil angegeben. In die Leitung 10 ist ein

Drosselelement 11, d.h. ein druckreduzierendes Funktionselement, integriert, wobei es sich beispielsweise um eine Blende fester Geometrie oder um ein Steuerventil mit variablem Strömungsquerschnitt handelt. Vorzugsweise für Zwecke der Triebwerksregelung soll der Druckabfall über das Drosselelement 11 im strömenden Medium meßtechnisch erfaßt werden, und zwar stufenlos sowie in seinem zeitlichen Verlauf. Zu diesem Zweck zweigen zwei Druckanschlüsse 8, 9 von der Leitung 10 ab, einer stromaufwärts und einer stromabwärts des Drosselelements 11. Die Druckanschlüsse 8, 9 bilden offene, volumetrische Verbindungen zum Differenzdruckgeber 1, so daß das strömende Medium in diesen ein- und aus diesem austreten kann. Die Anschlußgeometrie ist so gewählt, daß praktisch nur die statischen Druckkomponenten im Differenzdruckgeber 1 wirksam werden. Innerhalb eines rohrartigen Gehäuses 2 mit vorzugsweise kreiszylindrischem Innenquerschnitt ist ein kolbenartiger Kern 3 aus ferromagnetischem Material axial beweglich geführt. Da sich im dargestellten Beispiel beiderseits des Kerns 3 das selbe Medium befindet, muß die Führung/Passung im Gehäuse 2 nicht vollständig mediendicht sein. Eine kleine, definierte Leckageströmung über den Außenumfang des Kerns 3 wirkt "schmierend", d.h. reibungsreduzierend, und kann durchaus erwünscht sein, solange sie in Relation zur eigentlichen Strömung durch die Leitung 10 vernachlässigbar klein bleibt. Falls der Differenzdruckgeber zwischen unterschiedlichen Medien angeordnet wird, welche nicht vermischt werden dürfen, muß der Kern selbstverständlich in seiner Führung abgedichtet sein, wobei Reibungsarmut eine wichtige Rolle spielt. Hierfür bieten sich u.a. sogenannte Rollstrumpfdichtungen an.

Auf der Seite geringeren Druckes ist der Kern 3 über eine Druckfeder 4 zum Gehäuse 2 hin abgestützt. Die Charakteristik der Druckfeder 4 ist so gewählt, daß sich der Kern 3 bei Anliegen eines Nenn-Differenzdruckes in seiner axial mittigen Sollage befindet. Weicht der Differenzdruck von besagtem Nennwert ab, so bewegt sich der Kern 3 axial, d.h. nach rechts oder links, so lange, bis wieder Gleichgewicht herrscht zwischen der Druckkraft (Differenzdruck x Stirnfläche) und der Federkraft. Auf der Außenseite des Gehäuses 2 sind drei Spulen 5 bis 7 angeordnet, mittels derer die Axialbewegungen des Kerns 3 in elektrische Meßsignale umgesetzt werden. Eine Primärspule 5 erstreckt sich axial etwa über den gesamten Hubbereich des Kerns 3. Die Primärspule 5 wird im Betrieb mit einer Wechselspannung/Referenzspannung Ur beaufschlagt und erzeugt somit ein elektromagnetisches Wechselfeld, welches insbesondere den Hubbereich des Kerns 3 erfassenerfassen/durchdringen soll. Das Gehäuse 2 sollte deshalb aus einem Material bestehen, welches die magnetischen Feldlinien möglichst wenig beeinflußt, also z.B. aus Kunststoff. Koaxial zur Primärspule 5 sind zwei gleichartige Sekundärspulen 6, 7 hintereinander angeordnet, welche sich zusammen etwa über die gleiche Axiallänge erstrecken, wie die Primärspule 5. Die Wechselspannung Ur erzeugt in den Sekundärspulen 6, 7 nach dem Transformatorprinzip frequenzgleiche Sekundärspannungen Ua, Ub, welche als Meßsignale verwendet werden. Der ferromagnetische Kern 3 beeinfluß den räumlichen Verlauf (Richtung, Verteilung, Dichte etc.) der magnetischen Feldlinien. In Abhängigkeit von der Axialposition des Kerns 3 ist das Magnetfeld entweder auf beide Sekundärspulen 6, 7 gleichermaßen verteilt oder es ist mehr auf eine der beiden Sekundärspulen konzentriert. Die Spule mit der stärkeren Feldkonzentration liefert dann eine höhere induzierte Spannung. Für den gesamten Hubbereich des Kerns 3 gilt - zumindest in guter Näherung - die Relation: (Δp-ΔpN) ∿ (Ua - Ub) ./. (Ua + Ub), wobei (Ua + Ub) ≈ const.

In Worten ausgedrückt, ist der Unterschied zwischen dem Ist-Differenzdruck (Δp) und dem Nenn-Differenzdruck (ΔpN) proportional zum Quotienten aus der Differenz der Sekundärspannungen und der Summe der Sekundärspannungen, wobei letztere etwa konstant ist. Somit ist letztlich die Differenz der Sekundärspannungen ein Maß für die Änderung des Differenzdruckes, ausgehend vom Nenn-Differenzdruck. Es besteht also - in guter Näherung - ein linearer Zusammenhang zwischen dem elektrischen Meßsignal (Ua - Ub) und der axialen Auslenkung des Kerns 3 aus seiner Soll-Lage. Falls die Spannung Ua gegenüber Ub zunimmt, bedeutet dies, daß der Kern 3 weiter nach rechts gewandert ist, d.h. der Druckunterschied von links nach rechts größer geworden ist. Somit kann man dem "Vorzeichen" (+, -) der Spannungsdifferenz Ua - Ub entnehmen, ob es sich um eine Zu- oder Abnahme der Druckdifferenz handelt. Abschließend sei noch darauf hingewiesen, daß die Spulen - wie der Kern - auch innerhalb des rohrartigen Gehäuses angeordnet sein können, wobei die Spulen zweckmäßig in einem elektrisch isolierenden Trägermaterial so eingebettet sind, daß ein ebenfalls rohrförmiger Spulenkörper entsteht, in welchem der ferromagnetische Kern unmittelbar geführt ist. Ein Vorteil dieser "inneren Spulenanordnung" besteht darin, daß das Gehäuse auch aus ferromagnetischem Material, z.B. aus Stahl, bestehen darf. Ein gewisser Nachteil liegt in der Führung der Spulenanschlüsse durch die Gehäusewand (Abdichtung etc.). Da eine solche Modifikation für den Fachmann leicht verständlich ist, wird auf eine bildliche Darstellung verzichtet.

## Patentansprüche

1. Differenzdruckgeber für Gasturbinentriebwerke, zur Messung variabler Druckunterschiede innerhalb eines Mediums oder zwischen unterschiedlichen Medien, insbesondere für einen Einsatz in Kontakt mit heißen Medien, wie dem Kraftstoff, dem Schmieröl und dem Prozessgas, gemäß dem Prinzip eines elektrischen Differentialtransformators mit mindestens einer Primär- und mindestens einer Sekundärspule, umfassend einen kolbenartigen, innerhalb eines Gehäuses begrenzt axial beweglichen und zumindest annähernd fluiddicht geführten Kern aus ferromagnetischem Material, mindestens ein die axiale Sollposition des Kerns bei Nenn-Differenzdruck vorgebendes, federelastisches Element sowie ein rohrartiges Gehäuse mit je einem Druckanschluss beiderseits des Hubbereiches des Kerns, **gekennzeichnet durch** eine Ausführung als linearer Weggeber nach dem LVDT-Prinzip (Linear Variable Displacement Transducer), umfassend eine sich koaxial zum Kern (3) etwa über dessen Hubbereich erstreckende Primärspule (5) mit Anschluss für eine elektrische Wechselspannung, sowie zwei gleichartige, axial hintereinander angeordnete, sich zusammen etwa über die Länge der Primärspule (5) erstreckende und zu dieser koaxiale Sekundärspulen (6,7) mit separatem Spannungsabgriff.

2. Differenzdruckgeber nach Anspruch 1, **gekennzeichnet durch** eine Anordnung der Primärspule (5) und der Sekundärspulen (6,7) auf der Außenseite des rohrartigen Gehäuses(2).

3. Differenzdruckgeber nach Anspruch 1, **gekennzeichnet durch** eine Anordnung der Primärspule und der Sekundärspulen auf der Innenseite des rohrartigen Gehäuses, wobei die Spulen in einen selbst rohrartigen Spulenkörper eingebettet sind, welcher in seinem Inneren den Kern axialbeweglich führt.

4. Differenzdruckgeber nach Anspruch 1, 2 oder 3, **gekennzeichnet durch** eine strömungstechnische Parallelschaltung zu einer Leitung (10)mit einem festen oder verstellbaren Drosselelement (11), z.B. mit einer Blende oder einem Ventil, wobei ein Druckanschluß (8) stromaufwärts des Drosselelements(11), ein Druckanschluß (9) stromabwärts des Drosselelements (11) in die Leitung (10) mündet, und wobei der Kern (3) nicht vollständig fluiddicht, d.h. mit definiertem Leckagespalt an seinem Umfang, geführt ist.

5. Differenzdruckgeber nach Anspruch 1, 2 oder 3, für die Differenzdruckmessung zwischen unterschiedlichen Medien, **gekennzeichnet durch** eine hermetische Abdichtung des Kerns in seiner Führung, z.B. mittels einer Rollstrumpfdichtung.

6. Differenzdruckgeber nach einem oder mehreren der Ansprüche 1 bis 5, **gekennzeichnet dadurch**, daβ das federelastische Element als Druckfeder (4) zwischen Kern (3) und Gehäuse (2) auf der vom geringeren Betriebsdruck beaufschlagten Seite des Kerns (3) ausgeführt ist.

## Claims

1. Differential pressure transducer for gas turbine power units for measuring variable pressure differentials within a medium or between different media, in particular for use in contact with hot media such as fuel, lubricating oil and process gas, according to the principle of an electrical differential transformer with a primary coil and at least one secondary coil, comprising a piston-type core made of a ferromagnetic material and guided within a housing for limited axial movement in a almost or completely fluid-tight manner, at least one spring-elastic element predetermining the axial set position of the core at nominal differential pressure, and a tubular housing with a pressure port each on both sides of the stroke range of the core, **characterised by** a design as a linear displacement transducer according to the LVDT principle (Linear Variable Displacement Transducer) comprising a primary coil (5) coaxial with the core (3) and extending approximately over the stroke range thereof with connection facilities for an alternating electric voltage and two similar secondary coils (6, 7) with separate voltage taps arranged axially behind one another and together extending approximately over the length of the primary coil (5) and coaxial therewith.

2. Differential pressure transducer according to claim 1, **characterised by** a location of the primary coil (5) and the secondary coils (6, 7) on the outside of the tubular housing (2).

3. Differential pressure transducer according to claim 1, **characterised by** a location of the primary coil and the secondary coils on the inside of the tubular housing, the coils being embedded in a tubular coil body within which the core is guided for axial movement.

4. Differential pressure transducer according to claim 1, 2 or 3, **characterised by** fluidic paralleling with a line (10) with a fixed or variable restrictive element (11) such as an orifice or a valve, a pressure port (8) upstream of the restrictive element (11) and a pressure port (9) downstream of the restrictive element (11) terminating in the line (10) and the core (3) not being completely fluid-tight, i.e. being guided with a defined leakage gap on its circumference.

5. Differential pressure transducer according to claim 1, 2 or 3 for measuring pressure differentials between different media, **characterised by** hermetic sealing of the core in its guide, for instance by means of a "rolled stocking" seal.

6. Differential pressure transducer according to any of claims 1 to 5, **characterised in that** the spring-elastic element is designed as a pressure spring (4) located between the core (3) and the housing (2) on that side of the core (3) which is acted on by the lower operating pressure.

## Revendications

1. Capteur de pression différentielle pour les mécanismes d'entraînement à turbines à gaz, pour la mesure des différences de pression variables à l'intérieur d'un milieu ou entre différents milieux, en particulier pour une utilisation en contact avec des milieux chauds, tels que le carburant, le lubrifiant pour moteurs et le gaz process, selon le principe d'un transformateur différentiel électrique avec au moins une bobine primaire et au moins une bobine secondaire, comprenant un noyau de type piston, mobile axialement de façon limitée à l'intérieur d'un boîtier et dirigé en étant au moins pratiquement tanche aux fluides, composé d'un matériau ferromagnétique, au moins un élément à déformation déterminant la position prescrite axiale du noyau pour une pression différentielle nominale, ainsi qu'un boîtier tubulaire avec un raccord de refoulement respectif des deux côtés de la zone d'élévation du noyau, **caractérisé par** une réalisation en tant qu'indicateur de course linéaire selon le principe LVDT (Linear Variable Displacement Transducer), comprenant une bobine primaire (5) s'étendant coaxialement au noyau (3) approximativement au-dessus de la zone d'élévation de celui-ci avec un raccord pour une tension alternative électrique, ainsi que deux bobines secondaires (6,7) similaires, disposées axialement l'une derrière l'autre, s'étendant ensemble sur la longueur de la bobine primaire (5) et coaxiales à cette dernière avec une prise de tension séparée.

2. Capteur de pression différentielle selon la revendication 1, **caractérisé par** une disposition de la bobine primaire (5) et des bobines secondaires (6,7) sur la face externe du boîtier tubulaire (2).

3. Capteur de pression différentielle selon la revendication 1, **caractérisé par** une disposition de la bobine primaire et des bobines secondaires sur la face interne du boîtier tubulaire, moyennant quoi les bobines sont insérées dans une armature de bobines elle-même tubulaire qui dirige dans sa partie interne le noyau selon un mouvement axial.

4. Capteur de pression différentielle selon la revendication 1, 2 ou 3, **caractérisé par** un montage en parallèle propre à la technique des fluides avec une conduite (10)- et un élément d'inductance (11) fixe ou réglable, par exemple un diaphragme ou une soupape, moyennant quoi un raccord de refoulement (8) en amont de l'élément d'inductance (11), un raccord de refoulement (9) en aval de l'élément d'inductance (11) débouchent dans la conduite (10), et moyennant quoi le noyau (3) est dirigé sans être complètement étanche aux fluides, c'est-à-dire que le périmètre de celui-ci présente une fissure de fuite définie.

5. Capteur de pression différentielle selon la revendication 1, 2 ou 3, pour la mesure de la pression différentielle entre différents milieux, **caractérisé par** une étanchéité hermétique du noyau dans son entraînement, par exemple au moyen d'un joint à manchon de roulement.

6. Capteur de pression différentielle selon une ou plusieurs des revendications 1 à 5, **caractérisé en ce que** l'élément à déformation est réalisé comme ressort de refoulement (4) entre le noyau (3) et le boîtier (2) sur la face du noyau (3) alimentée par la pression de service plus faible.
